# EUROPÄISCHE PATENTSCHRIFT

(11) **EP 2 921 929 B1**
(45) Veröffentlichungstag und Bekanntmachung des Hinweises auf die Patenterteilung: **13.02.2019**
(21) Anmeldenummer: 15157161.9
(22) Anmeldetag: 02.03.2015
(51) Int. Cl.: G06F 1/16, H04M 1/18

(54) **Schutzgehäuse für ein elektronisches Gerät**
Protective case for an electronic device
Étui de protection pour un dispositif électronique

(30) Priorität: 19.03.2014 DE 102014205140
(43) Veröffentlichungstag der Anmeldung: 23.09.2015
(73) Patentinhaber: ecom instruments GmbH, 97959 Assamstadt (DE)
(72) Erfinder: Rössler, Dieter, 74670 Forchtenberg-Ernsbach (DE); Hofmann, Dieter, 97922 Lauda-Königshofen (DE)
(74) Vertreter: BRP Renaud & Partner mbB Rechtsanwälte Patentanwälte Steuerberater

(56) Entgegenhaltungen:
- WO-A1-2013/181644
- US-A1- 2013 146 491
- US-A1- 2013 295 310

## Beschreibung

Die Erfindung betrifft eine Geräte-Anordnung.

Moderne Computer werden in zunehmendem Maße in Form sogenannter Tablet-Computer - in Fachkreisen auch vereinfacht "Tablets" genannt - hergestellt. Bei einem solchen Tablet handelt es sich um einen tragbaren Computer mit flacher Geometrie, der über ein in Form eines Touchscreens ausgebildetes, berührungsempfindliches Display verfügt, d.h. das Display des Tablets dient gleichzeitig als Eingabeeinheit, wodurch die Bereitstellung einer Tastatur oder einer Maus entbehrlich wird. Tablets der neuesten Generation ähneln in ihrem Leistungsumfang jenem moderner Smartphones.

Aufgrund ihrer einfachen Handhabung finden Tablet-Computer auch in zunehmendem Maße in explosionsgefährdeten Bereichen wie beispielsweise Öl-Bohrplattformen o.ä. als Arbeitsgerät Anwendung. Für jedwede Gehäuse, in denen elektronische Geräte montiert werden, die in solchen, explosionsgefährdeten Bereichen zum Einsatz kommen sollen, gelten u.a. in der DIN-Norm EN 60079-0 definierten Anforderungen an deren mechanische Festigkeit. Auf diese Weise soll verhindert werden, dass das Gehäuse durch von außen wirkende mechanische Stoßkräfte, beschädigt oder gar zerstört und das im Gehäuse aufgenommene Gerät freigelegt und mit der Umgebung in Kontakt geraten kann.

US2013/146491 und WO2013/181644 offenbaren Schutzgehäuse für Smartphones.

Es ist daher eine Aufgabe der vorliegenden Erfindung, eine verbesserte Ausführungsform einer Geräte-Anordnung mit einem elektronischen Gerät, insbesondere einem Tablet-Computer, zu schaffen, welche für den Einsatz in besagten explosionsgefährdeten Bereichen geeignet ist.

Diese Aufgabe wird durch eine Geräte-Anordnung gemäß dem unabhängigen Patentanspruch 1 gelöst. Bevorzugte Ausführungsformen sind Gegenstand der abhängigen Patentansprüche.

Grundgedanke der Erfindung ist demnach, eine ein elektronisches Gerät mit einem inneren Gehäuse und einem zusätzlichen, das innere Gehäuse umhüllenden äußeren Gehäuse zu umgeben, wobei das innere Gehäuse mittels einer Federungs-/Dämpfungseinrichtung am äußeren Gehäuse gelagert wird. Das innere Gehäuse ist dabei mit einem ersten Sichtfenster ausgestattet, welches durch eine durchsichtige Fensterscheibe verschlossen wird.

Im Falle eines von außen auf die Fensterscheibe wirkenden mechanischen Stoßes kann somit wenigstens ein Teil der beim Stoß auf das Gehäuse übertragenen Energie von der Dämpfungs-/Federungseinrichtung aufgenommen werden. Dies hat eine verbesserte Bruchbeständigkeit der Fensterscheibe zu Folge. Die hier vorgestellte Geräte-Anordnung eignet sich daher für den Einsatz in einem explosionsgefährdeten Bereich.

Eine erfindungsgemäße Geräte-Anordnung umfasst ein Gehäuse mit einem inneren Gehäuseboden und einem inneren Gehäusedeckel. Damit das Display des elektronischen Geräts auch in einem im inneren Gehäuse aufgenommenen Zustand des elektronischen Geräts nutzbar bleibt, besitzt der Gehäuseboden ein erstes Sichtfenster, welches durch eine Fensterscheibe aus einem durchsichtigen Material verschlossen wird. Unter dem Begriff "durchsichtig" seien im Folgenden insbesondere alle Materialien umfasst, welche für das menschliche Auge sichtbares Licht wenigstens teilweise transmittieren, also für optische Strahlung entsprechender Wellenlängen transparent sind.

Das innere Gehäuse wird dabei wenigstens teilweise von einem weiteren, äußeren Gehäuse umhüllt, wobei das innere Gehäuse mittels einer Federungs-/Dämpfungseinrichtung am äußeren Gehäuse gelagert ist. Unter dem Begriff "Federungs-/Dämpfungseinrichtung" zur Lagerung des inneren Gehäuses am äußeren Gehäuse seien im vorliegenden Zusammenhang dabei jedwede Elemente umfasst, die federnde Eigenschaften und, alternativ oder zusätzlich, auch dämpfende Eigenschaften besitzen.

Gemäß einer bevorzugten Ausführungsform kann auch das äußere Gehäuse mit einem äußeren Gehäuseboden und einem äußeren Gehäusedeckel ausgestattet werden. Dann bietet es sich an, auch im zusätzlichen, äußeren Gehäuse ein (zweites) Sichtfenster vorzusehen, welches mit dem am inneren Gehäuse vorgesehenen (ersten) Sichtfenster fluchtet. Die Lagerung des inneren Gehäuses am äußeren Gehäuse kann in diesem Szenario derart erfolgen, dass sich der innere Gehäusedeckel mittels der Federungs-/Dämpfungseinrichtung am äußeren Gehäusedeckel abstützt.

Gemäß einer weiteren bevorzugten Ausführungsform kann die Federungs-/Dämpfungseinrichtung wenigstens ein Federungs-/Dämpfungselement, vorzugsweise vier Federungs-/Dämpfungselemente, aus einem federelastischen Material umfassen. Diese mögen beispielsweise in einem Bereich der beiden Gehäusedeckel vorgesehen sein und bezüglich einer Draufsicht auf die beiden Deckel im Bereich ihrer vier Ecken angeordnet sein, wenn die beiden Deckel in Bezug auf die Draufsicht eine im Wesentlichen rechteckige Geometrie aufweisen. Selbstverständlich ist es in einer Variante dieser Ausführungsform auch denkbar, alternativ oder zusätzlich weitere Federungs-/Dämpfungselemente im Bereich der beiden Gehäuseböden oder an anderen geeigneten Positionen im Gehäuse vorzusehen, so dass die gefederte bzw. gedämpfte Lagerung des inneren Gehäuses am äußeren Gehäuse auch über die Gehäuseböden bzw. erfolgen kann.

Kostenvorteile bei der Herstellung der hier vorgestellten Geräteanordnung ergeben sich, wenn als federelastische Material ein Elastomer, insbesondere ein kommerziell in großen Mengen und kostengünstig verfügbarer Schaumstoff verwendet wird.

Gemäß einer ersten vorteilhaften Weiterbildung kann die durchsichtige Fensterscheibe im Wesentlichen spaltfrei an einem Display des elektronischen Geräts zur Anlage gebracht sein. In diesem Fall bietet es sich an, das elektronische Gerät einschließlich der Fensterscheibe in das innere Gehäuse zu klemmen. Daraus ergeben sich Kostenvorteile bei der Herstellung. Darüber hinaus lässt sich die Fensterscheibe im Reparatur- oder Austauschfall auf einfache Weise wieder vom Display des elektronischen Geräts entfernen.

In einer dazu alternativen, zweiten vorteilhaften Weiterbildung wird hingegen vorgeschlagen, die Fensterscheibe mittels einer Klebeverbindung am Display zu fixieren. Hierzu mag ein zwischen Fensterscheibe und dem Display des elektronischen Geräts ausgebildeter Zwischenraum mit einem durchsichtigen Klebstoff, beispielsweise Acrylat-Klebstoff, gefüllt werden.

Wird die Fensterscheibe in das innere Gehäuse geklemmt, so ist es auch denkbar, ein nicht-klebendes, gleichwohl durchsichtiges Füllmaterial, so beispielsweise Wasser, zu verwenden, um besagten Zwischenraum zu befüllen. In jedem Fällen empfiehlt sich die Verwendung von Substanzen mit hoher Dielektrizitätszahl, die vorzugsweise einen Wert von wenigstens 10, höchst vorzugsweise von wenigstens 20, aufweisen sollten, um eine gute kapazitive Kopplung zwischen der Fensterscheibe und dem Display des elektronischen Geräts zu gewährleisten. Dies stellt die im Falle eines Tablet-Computers zwingend erforderliche Touchscreen-Funktionalität seines Displays sicher.

Bei einer weiteren bevorzugten Ausführungsform kann das äußere Gehäuse aus einem Kunststoff, vorzugsweise aus einem thermoplastischen Kunststoff, höchst vorzugsweise aus Polyamid, hergestellt sein. Wird das äußere Gehäuse in der Art eines dem einschlägigen Fachmann als "Overmold" bekannten Gehäuses realisiert, so werden vom äußeren Gehäuse - zusätzlich zur erfindungswesentlichen Federungs-/Dämpfungseinrichtung weitere Dämpfungseigenschaften bereitgestellt, wodurch die Bruch- bzw. Stoßfestigkeit der gesamten Geräte-Anordnung weiter gesteigert werden kann.

Eine möglichst geringe Scheibendicke der Fensterscheibe begünstigt eine gute kapazitive Kopplung zwischen Fensterscheibe und Display und unterstützt auf diese Weise die erforderliche Touchscreen-Funktionalität des Displays. Daher wird besonders zweckmäßig vorgeschlagen, die Fensterscheibe mit einer Scheibendicke von 1 mm bis 4 mm, vorzugsweise von 1,5 mm bis 3,5 mm, höchst vorzugsweise von 2 mm bis 3 mm, zu versehen.

Bei einer weiteren vorteilhaften Ausführungsform kann das Material der Fensterscheibe ein Glas, vorzugsweise ein gehärtetes Glas, höchst vorzugsweise ein Aluminiumsilikat-Glas umfassen. Auf diese Weise kann das Display des elektronischen Gehäuses besonders wirksam gegen äußere Stoßkräfte geschützt werden.

Eine besonders gute Federungs- bzw. Dämpfungswirkung und somit eine verbesserte Stoßfestigkeit der gesamten Geräte-Anordnung wird erzielt, indem der innere Gehäuseboden mittels der Federungs-/ Dämpfungseinrichtung gegen den äußeren Gehäuseboden vorgespannt wird.

Vorteile bei der Montage und Fixierung der Fensterscheibe am inneren Gehäuse ergeben sich, wenn die erste Durchgangsöffnung auf einer inneren Gehäuseseite des inneren Gehäusebodens vorgesehen und von einem Gehäuserand des Gehäusebodens eingefasst wird.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

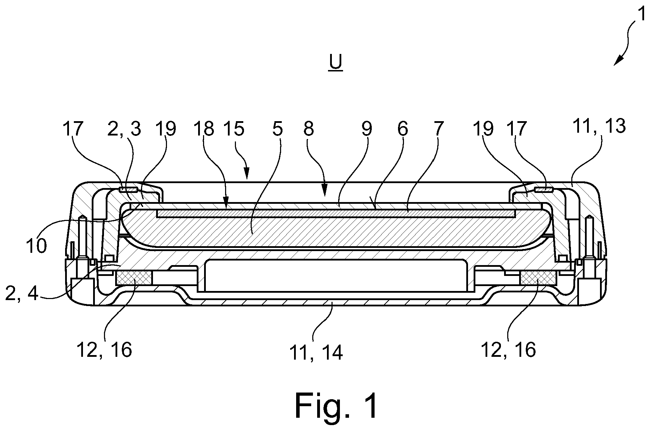

Die einzige Figur 1 illustriert in einem schematischen Längsschnitt ein Beispiel einer erfindungsgemäßen Geräte-Anordnung 1. Die Geräte-Anordnung 1 umfasst ein inneres Gehäuse 2 mit einem inneren Gehäuseboden 3 und einem inneren Gehäusedeckel 4. Der Gehäuseboden 3 und der Gehäusedeckel 4 werden, beispielsweise mit Hilfe einer Rastverbindung, aneinander befestigt. Am inneren Gehäuse 2 ist ferner ein elektronisches Gerät 5 in Form eines Tablet-Computers aufgenommen, welcher auf einer Oberseite 6 mit einem berührungsempfindlichen Display 7 ausgestattet ist. Im inneren Gehäuseboden 3 ist ein Sichtfenster 8 vorgesehen, welches von einer durchsichtigen Fensterscheibe 9 aus gehärtetem Glas, beispielsweise einem Aluminiumsilikatglas, verschlossen wird. Die Fensterscheibe 9 weist dabei eine Scheibendicke von ca. 2 mm auf, in Varianten sind aber auch andere geeignete Werte möglich.

Vorteile bei der Montage und Fixierung der Fensterscheibe 9 am inneren Gehäuse 2 lassen sich erzielen, wenn die erste Durchgangsöffnung 8 wie im Beispielszenario gezeigt auf einer inneren Gehäuseseite 10 des inneren Gehäusebodens 3 vorgesehen und von einem Gehäuserand 19 des Gehäusebodens 3 eingefasst wird.

Zur Fixierung des elektronischen Geräts 5 kann dieses einschließlich der Fensterscheibe 9 in das innere Gehäuse 2 geklemmt werden. In dem in Figur 1 gezeigten Beispiel wird die Fensterscheibe 9 mittels einer Klebeverbindung dauerhaft am Display 7 fixiert. Hierzu mag ein zwischen Fensterscheibe 9 und dem Display 7 des elektronischen Geräts 5 ausgebildeter Zwischenraum mit einem durchsichtigen Klebstoff 18, beispielsweise einem Acrylat-Klebstoff befüllt werden.

Im Falle o.g. Klemmverbindung bietet es sich - alternativ zur Verwendung eines Klebstoffs 18 - an, ein nicht-klebendes, gleichwohl durchsichtiges Füllmaterial wie beispielsweise Wasser zu verwenden, um besagten Zwischenraum zu füllen. In beiden Fällen empfiehlt sich die Verwendung von Substanzen mit hoher Dielektrizitätszahl, die vorzugsweise einen Wert von wenigstens 10, höchst vorzugsweise von wenigstens 20, aufweisen sollten, um die erforderliche gute kapazitive Kopplung zwischen der Fensterscheibe 9 und dem Display 7 des elektronischen Geräts 5 zu gewährleisten.

Zusätzlich zum inneren Gehäuse 2 umfasst die Geräte-Anordnung 1 auch ein das innere Gehäuse 2 teilweise umhüllendes äußeres Gehäuse 11, an welchem wiederum das innere Gehäuse 2 mittels einer Federungs-/Dämpfungseinrichtung 12 gelagert ist. Eine besonders gute Federungs- bzw. Dämpfungswirkung und somit eine verbesserte Stoßfestigkeit der gesamten Geräte-Anordnung 1 wird dabei erzielt, wenn der innere Gehäuseboden 3 mittels der Federungs-/ Dämpfungseinrichtung 12 gegen den äußeren Gehäuseboden 13 vorgespannt wird.

Wie Figur 1 erkennen lässt, ist auch das äußere Gehäuse 11 in analoger Weise zum inneren Gehäuse 2 mit einem äußeren Gehäuseboden 13 und einem äußeren Gehäusedeckel 14 ausgestattet. Auch im äußeren Gehäuseboden 13 ist ein (zweites) Sichtfenster 15 vorgesehen, welches mit dem ersten Sichtfenster 8 fluchtet, so dass dem Benutzer des Tablet-Computers der Blick auf dessen Display 7 freigegeben wird.

Im Beispiel der Figur 1 stützt sich der innere Gehäusedeckel 4 mittels der Federungs-/Dämpfungseinrichtung 12 am äußeren Gehäusedeckel 14 ab. Die Federungs-/Dämpfungseinrichtung 12 selbst umfasst mehrere Federungs-/Dämpfungselemente 16 aus einem federelastischen Material, die bezüglich einer Draufsicht auf die beiden Deckel 4, 14 im Bereich ihrer vier Ecken angeordnet sein mögen. Im Längsschnitt der Figur 1 sind folglich zwei der vier Federungs-/Dämpfungselemente 16 zu erkennen. In einer Variante kann jedoch auch nur ein einziges, beispielsweise entlang dem Rand des äußeren Gehäusebodens 14 umlaufend geschlossenes Federelement 16 vorgesehen werden (nicht gezeigt), Die Federungs-/Dämpfungselemente 16 können aus einem Elastomer wie beispielsweise einem Schaumstoff hergestellt sein.

In einer weiteren Variante kann auch daran gedacht sein, zusätzliche Federungs-/Dämpfungselemente zwischen den beiden Gehäuseböden 3, 13 vorzusehen. Ein derartiges Szenario ist in Figur 1 nicht dargestellt; vielmehr zeigt die Figur 1 zwischen den beiden Böden 3, 13 vorgesehene Dichtungselemente 17, mittels welcher die beiden Gehäuse 2, 11 fluidisch gegen die Umgebung abgedichtet werden.

Das äußere Gehäuse 11 kann aus einem Kunststoff, insbesondere aus einem thermoplastischen Kunststoff wie z.B. Polyamid gefertigt werden. Wird das äußere Gehäuse 11 in der Art eines dem Fachmann als "Overmold" bekannte Gehäuses realisiert, so werden vom äußeren Gehäuse 11 - zusätzlich zur erfindungswesentlichen Federungs-/Dämpfungseinrichtung 12 - weitere Dämpfungseigenschaften bereitgestellt, wodurch die Stoßfestigkeit der gesamten Geräte-Anordnung 1 nochmals verbessert werden kann.

## Patentansprüche

1. Geräte-Anordnung (1),
- mit einem elektronischen Gerät, insbesondere einem Tablet-Computer, mit einem einen inneren Gehäuseboden (3) und einen inneren Gehäusedeckel (4) umfassenden inneren Gehäuse (2), in welchem das elektronisches Gerät (5), aufgenommen ist, wobei der innere Gehäuseboden (3) ein erstes Sichtfenster (8) aufweist,
- mit einem das innere Gehäuse (2) wenigstens teilweise umhüllenden äußeren Gehäuse (11),
**dadurch gekennzeichnet, dass**
- das innere Gehäuse (2) mittels einer Federungs-/Dämpfungseinrichtung (12) am äußeren Gehäuse (11) gelagert ist,
- am elektronischen Gerät (5) und am inneren Gehäuse (2) eine das erste Sichtfenster (8) wenigstens teilweise verschließenden Fensterscheibe (9) aus einem durchsichtigen Material angebracht ist, wobei das Material der Fensterscheibe (9) ein Glas umfasst oder ein Glas ist,
- zwischen der Fensterscheibe (9) und dem Display (7) des elektronischen Geräts (5) ein Zwischenraum ausgebildet ist, der mit einem durchsichtigen Klebstoff (18) ausgefüllt ist.

2. Geräte-Anordnung nach Anspruch 1,
**dadurch gekennzeichnet, dass**
- das äußere Gehäuse (11) einen äußeren Gehäuseboden (13) und einen äußeren Gehäusedeckel (14) aufweist, wobei im äußeren Gehäusedeckel (14) ein zweites Sichtfenster (15) vorgesehen ist,
- sich der innere Gehäusedeckel (4) mittels der Federungs-/Dämpfungseinrichtung (12) federelastisch am äußeren Gehäusedeckel (14) abstützt.

3. Geräte-Anordnung nach Anspruch 1 oder 2,
**dadurch gekennzeichnet, dass**
die Federungs-/Dämpfungseinrichtung (12) wenigstens ein Federungs-/Dämpfungselement (16), vorzugsweise vier Federungs-/Dämpfungselemente (16), aus einem federelastischen Material umfasst.

4. Geräte-Anordnung nach Anspruch 3,
**dadurch gekennzeichnet, dass**
das federelastische Material ein Elastomer, insbesondere einen Schaumstoff, umfasst.

5. Geräte-Anordnung nach einem der vorhergehenden Ansprüche, **dadurch gekennzeichnet, dass**
das äußere Gehäuse (11) aus einem Kunststoff, vorzugsweise aus einem thermoplastischen Kunstsoff, höchst vorzugsweise aus Polyamid, hergestellt ist.

6. Geräte-Anordnung nach einem der vorhergehenden Ansprüche, **dadurch gekennzeichnet, dass**
die Fensterscheibe (9) eine Scheibendicke von 1 mm bis 4 mm, vorzugsweise von 1,5 mm bis 3 mm, höchst vorzugsweise von 2 mm bis 2,5 mm, aufweist.

7. Geräte-Anordnung nach einem der vorhergehenden Ansprüche, **dadurch gekennzeichnet, dass**
der innere Gehäuseboden (3) mittels der Federungs-/ Dämpfungseinrichtung (12) gegen den äußeren Gehäuseboden (13) vorgespannt ist.

8. Geräte-Anordnung nach einem der vorhergehenden Ansprüche, **dadurch gekennzeichnet, dass**
die erste Durchgangsöffnung (8) auf einer inneren Gehäuseseite (10) des inneren Gehäusebodens (3) vorgesehen und von einem Gehäuserand (19) des Gehäusebodens (3) eingefasst ist.

## Claims

1. Device arrangement (1),
- having an electronic device, in particular a tablet computer, having an inner housing (2), comprising an inner housing floor (3) and an inner housing cover (4), in which the electronic device (5) is accommodated, wherein the inner housing floor (3) has a first view window (8),
- having an outer housing (11) surrounding at least partially the inner housing (2),
**characterised in that**
- the inner housing (2) is supported by means of a spring/dampening apparatus (12) at the outer housing (11),
- at the electronic device (5) and at the inner housing (2) a window pane (9) made of a transparent material is mounted closing at least partially the first view window (8), wherein the material of the window pane (9) comprises a glass or is a glass,
- between the window pane (9) and the display (7) of the electronic device (5) is formed an interspace which is filled with a transparent adhesive (18).

2. Device arrangement according to claim 1,
**characterised in that**
- the outer housing (11) has an outer housing floor (13) and an outer housing cover (14), wherein in the outer housing cover (14) is provided a second view window (15),
- the inner housing cover (4) is supported resiliently by means of the spring/dampening apparatus (12) at the outer housing cover (14).

3. Device arrangement according to claim 1 or 2,
**characterised in that**
the spring/dampening apparatus (12) comprises at least one spring/dampening element (16), preferably four spring/dampening elements (16), made of a resilient material.

4. Device arrangement according to claim 3,
**characterised in that**
the resilient material comprises an elastomer, in particular a foamed material.

5. Device arrangement according to any of the preceding claims,
**characterised in that**
the outer housing (11) is manufactured from a plastic, preferably from a thermoplastic plastic, most preferably from polyamide.

6. Device arrangement according to any of the preceding claims,
**characterised in that**
the window pane (9) has a pane thickness of 1 mm to 4 mm, preferably from 1.5 mm to 3 mm, most preferably from 2 mm to 2.5 mm.

7. Device arrangement according to any of the preceding claims,
**characterised in that**
the inner housing floor (3) is pre-tensioned by means of the spring/dampening apparatus (12) against the outer housing floor (13).

8. Device arrangement according to any of the preceding claims,
**characterised in that**
the first through opening (8) is provided on an inner housing side (10) of the inner housing floor (3) and is enclosed by a housing rim (19) of the housing floor (3).

## Revendications

1. Agencement d'appareil (1),
- avec un appareil électronique, en particulier un ordinateur du type tablette, avec un corps intérieur (2) qui comprend un fond de corps intérieur (3) et un couvercle de corps intérieur (4) et dans lequel l'appareil électronique (5) est logé, le fond de corps intérieur (3) comportant une première fenêtre de vue (8),
- avec un corps extérieur (11) qui enveloppe au moins partiellement le corps intérieur (2),
**caractérisé en ce que**
- le corps intérieur (2) est assemblé au corps extérieur (11) au moyen d'un dispositif de suspension élastique/d'amortissement (12),
- une vitre de fenêtre (9) en un matériau transparent fermant au moins partiellement la première fenêtre de vue (8) est agencée au niveau de l'appareil électronique (5) et du corps intérieur (2), le matériau de la vitre de fenêtre (9) comprenant un verre ou étant un verre,
- un espace intermédiaire qui est rempli d'un adhésif transparent (18) est réalisé entre la vitre de fenêtre (9) et l'écran d'affichage (7) de l'appareil électronique (5).

2. Agencement d'appareil selon la revendication 1,
**caractérisé en ce que**
- le corps extérieur (11) comporte un fond de corps extérieur (13) et un couvercle de corps extérieur (14), une deuxième fenêtre de vue (15) étant prévue dans le couvercle de corps extérieur (14),
- le couvercle de corps intérieur (4) s'appuie élastiquement au couvercle de corps extérieur (14) au moyen du dispositif de suspension élastique/d'amortissement (12).

3. Agencement d'appareil selon la revendication 1 ou 2,
**caractérisé en ce que**
le dispositif de suspension élastique/d'amortissement (12) comprend au moins un élément de suspension élastique/d'amortissement (16), de préférence quatre éléments de suspension élastique/d'amortissement (16), en un matériau élastique.

4. Agencement d'appareil selon la revendication 3,
**caractérisé en ce que**
le matériau élastique comprend un élastomère, en particulier une mousse.

5. Agencement d'appareil selon l'une quelconque des revendications précédentes,
**caractérisé en ce que**
le corps extérieur (11) est fabriqué en plastique, de préférence en une matière thermoplastique, encore plus de préférence en polyamide.

6. Agencement d'appareil selon l'une quelconque des revendications précédentes,
**caractérisé en ce que**
la vitre de fenêtre (9) a une épaisseur de vitre comprise entre 1 mm et 4 mm, de préférence entre 1,5 mm et 3 mm, encore plus de préférence entre 2 mm et 2,5 mm.

7. Agencement d'appareil selon l'une quelconque des revendications précédentes,
**caractérisé en ce que**
le fond de corps intérieur (3) est précontraint contre le fond de corps extérieur (13) au moyen du dispositif de suspension élastique/d'amortissement (12).

8. Agencement d'appareil selon l'une quelconque des revendications précédentes,
**caractérisé en ce que**
la première ouverture de passage (8) est prévue sur un côté de corps intérieur (10) du fond de corps intérieur (3) et est entourée par un bord de corps (19) du fond de corps (3).
